# DEMANDE DE BREVET EUROPEEN

(11) **EP 1 681 456 A1**
(43) Date de publication de la demande: **19.07.2006**
(21) Numéro de dépôt: 05028360.5
(22) Date de dépôt: 23.12.2005
(51) Int. Cl.: F02M 25/07, F01P 3/14, F01P 7/16

(54) **Installation de régulation thermique des gaz admis dans un moteur**

(30) Priorité: 27.12.2004 FR 0413947
(71) Demandeur: VALEO SYSTEMES THERMIQUES, 78321 Le Mesnil St Denis Cedex (FR)
(72) Inventeur: Jouanny, Philippe, 78280 Guyancourt (FR); Ap, Ngy Srun, 78470 St Remy les Chevreuse (FR)
(74) Mandataire: Rolland, Jean-Christophe

(57) **Abrégé**

L'invention propose une installation de régulation thermique des gaz admis dans un moteur, notamment un moteur de véhicule automobile, comportant une boucle principale capable de refroidir le moteur (40) en réchauffant un liquide de refroidissement. L'installation comporte en outre un refroidisseur de gaz d'échappement recirculés (2) relié à une arrivée de liquide (63) pour refroidir les gaz d'échappement recirculés préalablement à leur admission dans le moteur. L'installation comporte en outre une boucle secondaire capable de refroidir le liquide de refroidissement à sa sortie du moteur et un dispositif de régulation thermique (8). Le dispositif de régulation thermique (8) est capable d'ajuster le débit de liquide chaud de la boucle principale et le débit de liquide froid de la boucle secondaire à faire passer dans l'arrivée de liquide (63) du refroidisseur de gaz d'échappement recirculés, en fonction de la température du liquide en sortie du refroidisseur de gaz d'échappement recirculés (2).

## Description

L'invention conceme une installation et un procédé de régulation de la température des gaz admis dans un moteur, notamment un moteur de véhicule automobile.

Les moteurs thermiques turbo-compressés, notamment les moteurs diesel, sont classiquement alimentés par un air sous pression appelé air de suralimentation. Cependant, pour obtenir un meilleur rendement du moteur et diminuer la pollution, il est connu de recirculer une partie des gaz d'échappement vers l'admission du moteur. Ces gaz d'échappement sont classiquement appelés gaz d'échappement recirculés. généralement désignés par l'acronyme EGR (Exhaust Gas Recirculation).

Les gaz d'échappement recirculés sont généralement à une température très élevée, jusqu'à 500°C environ. C'est pourquoi, ils sont classiquement refroidis au moyen d'un échangeur alimenté par le liquide de refroidissement du moteur, appelé refroidisseur de gaz d'échappement recirculés (ou EGRC en abrégé).

Le refroidisseur de gaz d'échappement recirculés peut être un échangeur gaz d'échappement recirculés/liquide caloporteur. Dans des réalisations existantes, le liquide caloporteur a une température fixe. Une dérivation sur le refroidisseur de gaz d'échappement recirculés peut également être prévue pour les phases de fonctionnement du moteur où il n'est pas souhaitable de refroidir les gaz d'échappement recirculés, comme par exemple en phase de démarrage du moteur.

Cependant, en fonction des phases de fonctionnement du moteur, les besoins en refroidissement des gaz d'échappement recirculés sont variables.

En particulier, les refroidisseurs de gaz d'échappement recirculés sont dimensionnés sur la base des conditions de charge du moteur, et donc pour des gaz d'échappement recirculés chauds, par exemple de l'ordre de 500°C, et des débits de gaz élevés. Dès lors que la température et le débit des gaz d'échappement recirculés sont abaissés, l'efficacité de tels refroidisseurs devient trop élevée. En particulier, dans la phase de fonctionnement à froid du moteur, les refroidisseurs de gaz d'échappement recirculés sont surdimensionnés par rapport aux besoins en refroidissement. Un phénomène de condensation important peut alors apparaître, dont les conséquences peuvent être l'encrassement du refroidisseur de gaz d'échappement recirculés.

L'efficacité et la durée de vie du refroidisseur de gaz d'échappement recirculés peuvent alors être réduites.

Une solution connue pour réguler la température des gaz d'échappement recirculés consiste à alimenter le refroidisseur de gaz d'échappement recirculés par le liquide de refroidissement du moteur directement.

Dans une réalisation particulière, il est connu de réguler le débit de liquide délivré dans le refroidisseur des gaz d'échappement recirculés en fonction de la température de ce liquide en sortie du refroidisseur de gaz d'échappement recirculés, au moyen d'un thermostat. Toutefois, dans cette réalisation particulière, une unique source de fluide sortant du moteur est utilisée.

Par ailleurs, une telle réalisation ne permet pas d'obtenir une température assez froide pour adapter la température des gaz EGR aux nouvelles normes de pollution et aux besoins du moteur. Les nouvelles normes de pollution imposent en effet une température pour les gaz d'échappement recirculés admis dans le moteur de l'ordre de 100°C, alors que ces gaz sont actuellement injectés dans le moteur à une température de l'ordre de 200 à 300°C. En outre, lorsque les gaz EGR ne sont pas suffisamment refroidis, le fonctionnement du moteur peut être altéré et la quantité de gaz EGR admise dans le moteur peut être limitée.

L'invention a pour but de surmonter les inconvénients précités en proposant une installation de régulation thermique des gaz admis dans un moteur, notamment un moteur de véhicule automobile, comportant une boucle principale capable de refroidir le moteur en réchauffant un liquide de refroidissement. L'installation comporte en outre un refroidisseur de gaz d'échappement recirculés relié à une arrivée de liquide pour refroidir les gaz d'échappement recirculés préalablement à leur admission dans le moteur. Avantageusement, l'installation comporte en outre une boucle secondaire capable de refroidir le liquide de refroidissement à sa sortie du moteur, et un dispositif de régulation thermique capable d'ajuster le débit de liquide chaud de la boucle principale et le débit de liquide froid de la boucle secondaire à faire passer dans l'arrivée de liquide du refroidisseur de gaz d'échappement recirculés, en fonction d'au moins une grandeur relative au liquide.

L'invention permet ainsi de disposer d'une seconde source de fluide pour refroidir les gaz EGR, et notamment d'une seconde source plus froide. Elle permet en outre de conserver la boucle chaude dans le circuit. Il est ainsi possible d'utiliser la chaleur dégagée par le refroidisseur de gaz d'échappement recirculés pour réchauffer le moteur, dans les phases de fonctionnement d'un tel réchauffement est requis, notamment en phase de montée en température.

Des caractéristiques optionnelles de l'installation de régulation thermique des gaz admis dans un moteur selon l'invention, complémentaires ou de substitution, sont énoncées ci-après:
- La grandeur relative au liquide est la température du liquide en sortie du refroidisseur de gaz d'échappement recirculés.
- Le dispositif de régulation agit sur le débit de liquide à faire passer de la sortie de liquide du refroidisseur de gaz d'échappement recirculés à l'entrée de la boucle secondaire et à l'entrée de la boucle principale, tandis que la sortie de la boucle secondaire et la sortie de la boucle principale alimentent l'arrivée de liquide du refroidisseur de gaz d'échappement recirculés.
- Le dispositif de régulation thermique est une vanne therrnostafique agencée en sortie du refroidisseur de gaz d'échappement recirculés.
- La vanne thermostatique met en communication la sortie de liquide du refroidisseur de gaz d'échappement recirculés avec l'entrée de liquide de la boucle principale et l'entrée de liquide de la boucle secondaire.
- Le dispositif de régulation agit sur le débit de liquide à faire passer de la sortie de la boucle principale à l'arrivée de liquide du refroidisseurde gaz d'échappement recirculés et de la sortie de la boucle secondaire à l'arrivée de liquide du refroidisseur de gaz d'échappement recirculés, tandis que la sortie de liquide du refroidisseur de gaz d'échappement recirculés alimente l'entrée de liquide de la boucle secondaire et l'entrée de liquide de la boucle principale.
- Le dispositif de régulation thermique comporte une sonde de température agencée en sortie du refroidisseur de gaz d'échappement recirculés et des électrovannes coopérant avec la sonde.
- Les électrovannes comprennent une première électrovanne raccordant la sortie de la boucle principale à l'arrivée de liquide du refroidisseur de gaz d'échappement recirculés et une deuxième électrovanne raccordant la sortie de la boucle secondaire à l'arrivée de liquide du refroidisseur de gaz d'échappement recirculés.
- La boucle principale comprend un radiateur principal de refroidissement à haute température pour refroidir le liquide de refroidissement à sa sortie du moteur.
- La boucle secondaire comprend un radiateur secondaire de refroidissement à basse température pour le refroidissement du liquide, l'écart entre la haute température du radiateur principal et la basse température du radiateur secondaire étant égal à au moins 10°C.
- Le radiateur principal et le radiateur secondaire font partie intégrante d'un même radiateur.
- L'installation comporte en outre un refroidisseur d'air de suralimentation relié à une arrivée de liquide froid pour refroidir l'air de suralimentation préalablement à son admission dans le moteur, le liquide froid étant délivré par le radiateur secondaire de la boucle secondaire.

L'invention propose en outre un procédé de régulation de la température de gaz admis dans un moteur, comportant le refroidissement des gaz d'échappement recirculés dans un refroidisseur de gaz d'échappement recirculés, préalablement à leur admission dans le moteur. On fait circuler un liquide chaud provenant du circuit de refroidissement du moteur et/ou un liquide froid dans le refroidisseur de gaz d'échappement recirculés pour refroidir les gaz d'échappement recirculés, le débit de liquide chaud et le débit de liquide froid étant ajustés en fonction de la température du liquide en sortie du refroidisseur de gaz d'échappement recirculés.

Des caractéristiques optionnelles du procédé de régulation thermique des gaz admis dans un moteur selon l'invention complémentaires ou de substitution, sont énoncées ci-après:
- La circulation de liquide chaud et de liquide froid dans le refroidisseur de gaz d'échappement recirculés est sensiblement nulle, lorsque la température du liquide en sortie du refroidisseur de gaz d'échappement recirculés est sensiblement inférieure à 60°C.
- La circulation de liquide froid est sensiblement nulle dans le refroidisseur de gaz d'échappement recirculés, lorsque la température du liquide en sortie du refroidisseur de gaz d'échappement recirculés est sensiblement comprise entre 60°C et 65°C.
- On fait circuler un mélange de liquide à haute température et de liquide à basse température dans le refroidisseur de gaz d'échappement recirculés, lorsque la température du liquide en sortie du refroidisseur de gaz d'échappement recirculés est sensiblement comprise entre 65°C et 70°C.
- La circulation de liquide chaud est sensiblement nulle dans le refroidisseur de gaz d'échappement recirculés, lorsque la température du liquide en sortie du refroidisseur de gaz d'échappement recirculés est sensiblement supérieure à 70°C.
   L'invention propose également un échangeur pour le refroidissement de gaz d'échappement recirculés comportant un refroidisseur de gaz d'échappement recirculés relié à une arrivée de gaz d'échappement recirculés, et à une arrivée de liquide pour un échange de chaleur avec les gaz d'échappement recirculés. L'échangeur comporte en outre un dispositif de régulation comportant une entrée raccordée à la sortie du refroidisseur de gaz d'échappement recirculés et deux sorties, tandis que le dispositif de régulation est apte à ajuster le débit de liquide à faire passer de son entrée à chacune de ses sorties, en fonction de la température du liquide en sortie du refroidisseur de gaz d'échappement recirculés.
   D'autres caractéristiques et avantages de l'invention apparaîtront à l'examen de la description détaillée ci-après, et des dessins annexés sur lesquels ;
- la figure 1 est un schéma général d'une installation classique de régulation de la température des gaz admis dans un moteur ;
- la figure 2 est un schéma général d'une installation de régulation de la température des gaz admis dans le moteur, selon l'invention ;
- la figure 3 est un schéma d'une installation de régulation de la température des gaz admis dans le moteur, selon une première forme de réalisation de l'invention ;
- la figure 4 est un schéma d'une installation de régulation de la température des gaz admis dans le moteur, selon une deuxième forme de réalisation de l'invention ;
- les figures 5 et 6 montrent deux variantes de réalisation d'un radiateur à basse température et d'un radiateur à haute température ;
- les figures 7 à 10 sont des schémas du dispositif de régulation thermique conforme à la première forme de réalisation de l'invention, dans différents états ; et
- la figure 11 est un organigramme représentant les étapes mises en oeuvre par l'installation conforme à la première forme de réalisation de l'invention pour réguler le refroidisseur de gaz d'échappement recirculés.

Les dessins contiennent, pour l'essentiel, des éléments de caractère certain. Ils pourront donc non seulement servir à mieux faire comprendre la description, mais aussi contribuer à la définition de l'invention, le cas échéant.

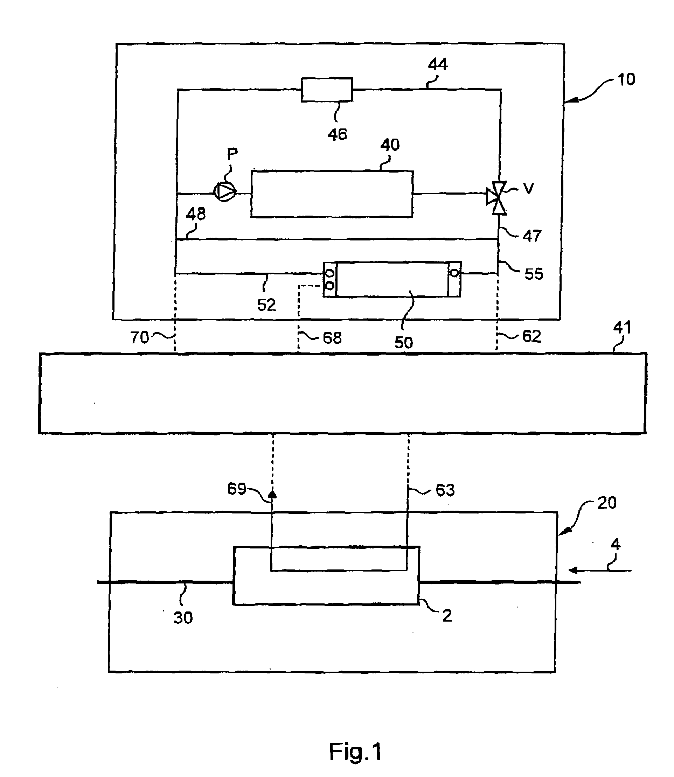

La figure 1 est un schéma général d'une installation d'échange de chaleur classique. Cette installation d'échange de chaleur classique comprend un premier module 10 constituant le circuit de refroidissement du moteur et un deuxième module 20 comprenant le refroidisseur de gaz d'échappement recirculés,

Les modules 10 et 20 sont reliés par un circuit de raccordement 41 permettant au deuxième module d'utiliser le liquide de refroidissement du moteur pour l'échange de chaleur dans le refroidisseur de gaz d'échappement recirculés.

Le premier module 10 comprend une boucle principale équipée d'une pompe P, pouvant être mécanique qui fait circuler le liquide du circuit de refroidissement à travers le moteur 40. Après avoir traversé le moteur, le liquide peut être réparti entre trois canalisations :
- Le liquide qui sort du moteur peut passer dans une canalisation de dérivation 44, sur laquelle est monté un radiateur de chauffage 46, également appelé aérotherme, qui permet de chauffer l'habitacle du véhicule automobile.
- Le liquide qui sort du moteur peut passer dans une canalisation 47, qui peut faire passer l'eau dans une canalisation de dérivation 48 qui ramène l'eau jusqu'à la pompe de circulation P sans refroidissement.
- Le liquide qui sort du moteur peut passer dans une canalisation 55, qui permet d'amener l'eau vers un radiateur à haute température 50. A sa sortie du radiateur 50, le liquide refroidi est ramené vers la pompe de circulation P par la canalisation 52.

Le liquide de refroidissement du moteur est ramené par l'intermédiaire de la canalisation 70 jusqu'à la pompe de circulation P.

Une vanne V peut être prévue à la sortie du moteur pour répartir le liquide entre ces trois canalisations en fonction des besoins du moteur, de la température de l'eau à la sortie du moteur 40, et du chauffage de l'habitacle.

Dans le deuxième module 20, le refroidisseur de gaz d'échappement recirculés 2 reçoit les gaz d'échappement recirculés, schématisés par la flèche 4. Après l'échange de chaleur dans le refroidisseur de gaz d'échappement recirculés, les gaz d'échappement recirculés passent par une canalisation 30 vers l'admission du moteur.

Cette canalisation de sortie 30 est commune au refroidisseur d'air de suralimentation et au réchauffeur d'air d'admission qui ne sont pas représentés ici.

Le refroidisseur de gaz d'échappement recirculés 2 est en outre relié à une entrée de liquide 63 dans laquelle arrive un liquide caloporteur pour l'échange de chaleur avec les gaz d'échappement recirculés.

Le circuit de raccordement 41 permet d'alimenter l'entrée de liquide 63 du refroidisseur EGRC avec le liquide chaud provenant de la canalisation de dérivation 62 et le liquide refroidi provenant de la canalisation de dérivation 68. Dans la canalisation 62, qui véhicule le liquide chaud sortant du moteur 40, le liquide est sensiblement à la même température que l'eau qui sort du moteur, c'est à dire à une température sensiblement comprise entre 85°C et 118°C, selon les phases de fonctionnement du véhicule, et en particulier lorsque le moteur est chaud. La canalisation 68 véhicule le liquide de refroidissement du moteur après son refroidissement dans le radiateur 50.

L'entrée de liquide 63 du refroidisseur EGRC peut être alimentée par le liquide froid 68 issu du radiateur 50, le liquide chaud 62 sortant du moteur ou un mélange des deux.

Cependant, les normes anti-pollutions imposent des températures pour les gaz d'pement recirculés de plus en plus faibles, avant leur admission dans le moteur. Les températures imposées par ces normes tendent à s'approcher de 100°C. Or la température du liquide froid 68 en entrée du refroidisseur EGRC est elle-même aux alentours de 100°C, ce qui ne permet pas de respecter ces normes de pollution.

Le circuit de raccordement 41 de l'art antérieur ne permet pas d'optimiser la température des gaz d'échappement recirculés.

L'invention vient améliorer la situation.

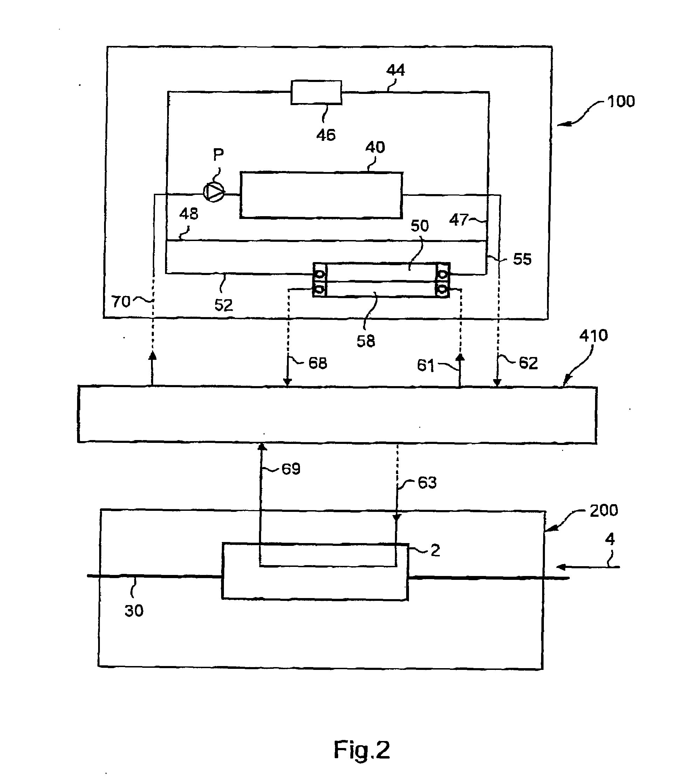

II est fait référence à la figure 2 qui représente un schéma d'une installation de régulation de la température des gaz admis dans le moteur conformément à l'invention.

Le premier module 100 comprend une boucle principale, analogue à celle décrite ci-avant, pour refroidir le liquide qui traverse le moteur. Elle comporte en outre une boucle secondaire comprenant un refroidisseur à basse température 58 alimenté par un liquide délivré par la canalisation 61. Le liquide peut y être refroidi à une température plus basse que dans le refroidisseur à haute température 50. En particulier, le liquide qui sort du refroidisseur à basse température 58 a une température comprise entre 25°C et 50°C, lorsque la température ambiante est de l'ordre de 20°C. Le liquide à basse température sort du refroidisseur 58 et passe dans la canalisation 68.

Dans la boucle principale, le liquide est réchauffé à son passage dans le moteur. Dans la boucle secondaire, le liquide est refroidi à son passage dans le radiateur 58.

Dans la suite de la description, le liquide fourni par la boucle principale sera appelé "liquide chaud" et le liquide fourni par la boucle secondaire sera appelé "liquide froid", pour plus de clarté.

Un circuit de raccordement 410 permet de raccorder la boucle principale et la boucle secondaire du premier module au refroidisseur de gaz d'échappement recirculés.

L'installation comprend un dispositif de régulation de la température des gaz d'échappement recirculés capable d'ajuster le débit du liquide chaud de la boucle principale et le débit de liquide froid de la boucle secondaire à faire passer dans l'entrée de liquide 63 du refroidisseur de gaz d'échappement recirculés 2. Ce dispositif de régulation de la température des gaz EGR agit en fonction d'au moins une grandeur relative au liquide. En particulier, cette grandeur relative au liquide est la température du liquide à la sortie 69 du refroidisseur de gaz d'échappement recirculés 2.

Dans la suite de la description, la grandeur relative au liquide considérée sera la température du liquide à la sortie 69 du refroidisseur de gaz d'échappement recirculés 2, à titre d'exemple non limitatif.

Le circuit de raccordement 410 est adapté pour raccorder la sortie de liquide 69 du refroidisseur EGRC aux canalisations d'entrée respectives 61 et 70 du radiateur à basse température 58 et du moteur 40. Le liquide qui sort du radiateur 58 par la canalisation 68 est un liquide froid tandis que le liquide qui sort du moteur 40 est un liquide chaud.

Le circuit de raccordement 410 est également adapté pour raccorder les canalisations de sorties respectives 68 et 62 du radiateur à basse température 58 et du moteur 40 à la canalisation d'entrée 63 du refroidisseur EGRC.

Des moyens de commande, par exemple une unité de commande électronique, peuvent être prévus pour commander le dispositif de régulation thermique de la température des gaz EGR en fonction de la température du liquide en sortie du refroidisseur EGRC.

Selon une première forme de réalisation de l'invention, le dispositif de régulation agit sur le débit de liquide à faire passer de la sortie de liquide du refroidisseur de gaz d'échappement recirculés 69 à l'entrée de la boucle secondaire 61 et à l'entrée de la boucle principale 70. De plus, la sortie de la boucle secondaire 68 et la sortie de la boucle principale 62 alimentent l'arrivée de liquide 63 du refroidisseur de gaz d'échappement recirculés.

Selon une deuxième forme de réalisation de l'invention, le dispositif de régulation agit sur le débit de liquide à faire passer de la sortie de la boucle principale 62 à l'arrivée de liquide 63 du refroidisseur de gaz d'échappement recirculés 2 et de la sortie de la boucle secondaire 68 à l'arrivée de liquide 63 du refroidisseur de gaz d'échappement recirculés. La sortie de liquide 69 du refroidisseur de gaz d'échappement recirculés alimente l'entrée de liquide 61 de la boucle secondaire et l'entrée de liquide 70 de la boucle principale.

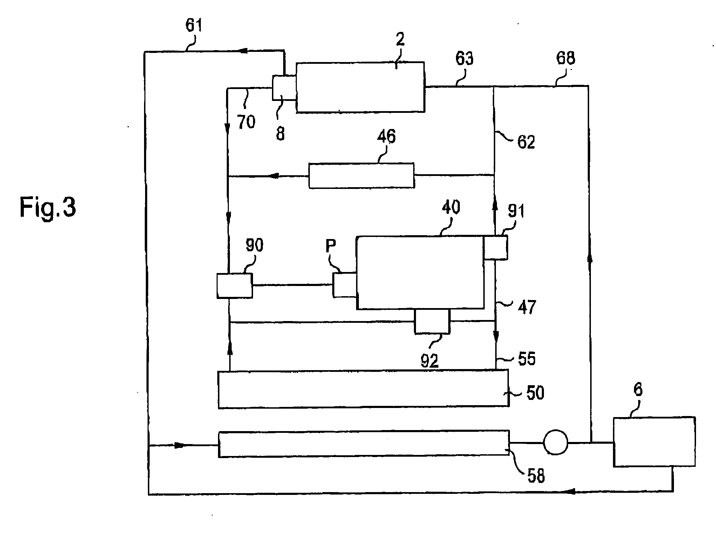

La figure 3 est un schéma d'une installation de régulation de la température des gaz admis dans le moteur conformément à la première forme de réalisation de l'invention.

Dans cette première forme de réalisation, le dispositif de régulation thermique comprend une vanne thermostatique 8 placée directement en sortie du refroidisseur EGRC. La vanne thermostatique régule la température des gaz d'échappement recirculés en ajustant le débit de liquide chaud à faire passer de la boucle principale au refroidisseur de gaz d'échappement recirculés 2 et le débit de liquide froid à faire passer de la boucle secondaire au refroidisseur de gaz d'échappement recirculés 2.

Plus précisément, là vanne thermostatique 8 reçoit le liquide qui sort du refroidisseur EGRC. Elle comporte une sortie raccordée à la canalisation 61, qui ramène le liquide dans le radiateur 58, et une sortie raccordée à la canalisation 70, qui ramène le liquide vers le moteur 40. La vanne 8 est conformée pour ajuster le débit de liquide à faire passer de la sortie de liquide du refroidisseur EGRC à la canalisation 61, d'une part, et à la canalisation 70, d'autre part, en fonction de la température du liquide en sortie du refroidisseurEGRC. Par ailleurs, la sortie 68 du radiateur 58 et la sortie de liquide 62 du moteur alimentent directement l'arrivée de liquide 63 du refroidisseur EGRC, en liquide froid et en liquide chaud respectivement.

Ainsi, les proportions de liquide à refroidir dans le radiateur 58 et/ou à réchauffer dans le moteur 40 sont ajustées directement en sortie du refroidisseur EGRC, tandis que le liquide froid de la boucle secondaire et le liquide chaud de la boucle principale sont délivrés dans l'arrivée de liquide 63 du refroidisseur EGRC.

L'installation peut en outre comporter, de manière connue, un thermostat moteur 90 pour réguler la température du moteur, un échangeur d'huile 92 pour refroidir l'huile du moteur et un boîtier de sortie de liquide 91.

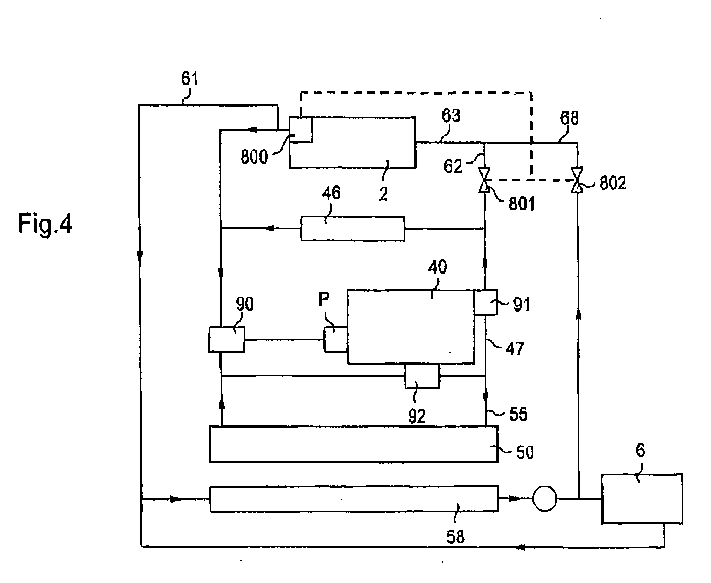

La figure 4 est un schéma d'une installation de régulation de la température des gaz admis dans le moteur, conforme à la deuxième forme de réalisation de l'invention.

Dans cette deuxième forme de réalisation, le dispositif de régulation thermique des gaz d'échappement recirculés comprend une sonde 800 placée directement en sortie du refroidisseur EGRC et un ensemble d'électrovannes 801 et 802 reliées à la sonde 800.

La sonde et les électrovannes permettent de réguler la température des gaz d'échappement recirculés en ajustant le débit de fluide chaud de la boucle principale et le débit de fluide froid de la boucle secondaire à faire passer dans le refroidisseur de gaz d'échappement recirculés.
Plus précisément, l'électrovanne 81 est placée entre la sortie de liquide 62 du moteur 40 et l'entrée de liquide 63 du refroidisseur 2, et l'électrovanne 81 est placée entre la sortie de liquide 68 du radiateur 50 et l'entrée de liquide 63 du refroidisseur 2. De la canalisation 62, débouche le liquide réchauffé dans le moteur 40 et de la canalisation 68 débouche le liquide refroidi dans le radiateur 58. Le liquide sortant du refroidisseur EGRC se répartit alors entre le radiateur 58 et le moteur 40.

L'électrovanne 801 agit sur le débit de liquide chaud à faire passer dans le refroidisseur EGRC et l'électrovanne 802 agit sur le débit de liquide froid à faire passer dans le refroidisseur EGRC, en fonction de la température des gaz d'échappement recirculés mesurée par la sonde 800 en sortie du refroidisseur EGRC. Le liquide froid et le liquide chaud se mélangent dans l'entrée de liquide 63 du refroidisseur EGRC.

Ainsi, les proportions de liquide froid et/ou de liquide chaud à faire passer dans le refroidisseur EGRC sont ajustées directement en entrée du refroidisseur EGRC, tandis que le liquide sortant du refroidisseur EGRC se répartit dans le radiateur 58 pour y être refroidi et/ou dans le moteur pour y être réchauffé.

L'installation de la figure 4 peut comporter en outre, de manière connue, un thermostat moteur 90 pour réguler la température du moteur, un échangeur d'huile 92 pour refroidir l'huile du moteur et un boîtier de sortie de liquide 91.

Dans les deux formes de réalisation de l'invention, le débit de liquide froid 68 et le débit de liquide chaud 62 à envoyer dans le refroidisseur EGRC sont ajustés en fonction de la température du liquide à la sortie du refroidisseur EGRC.

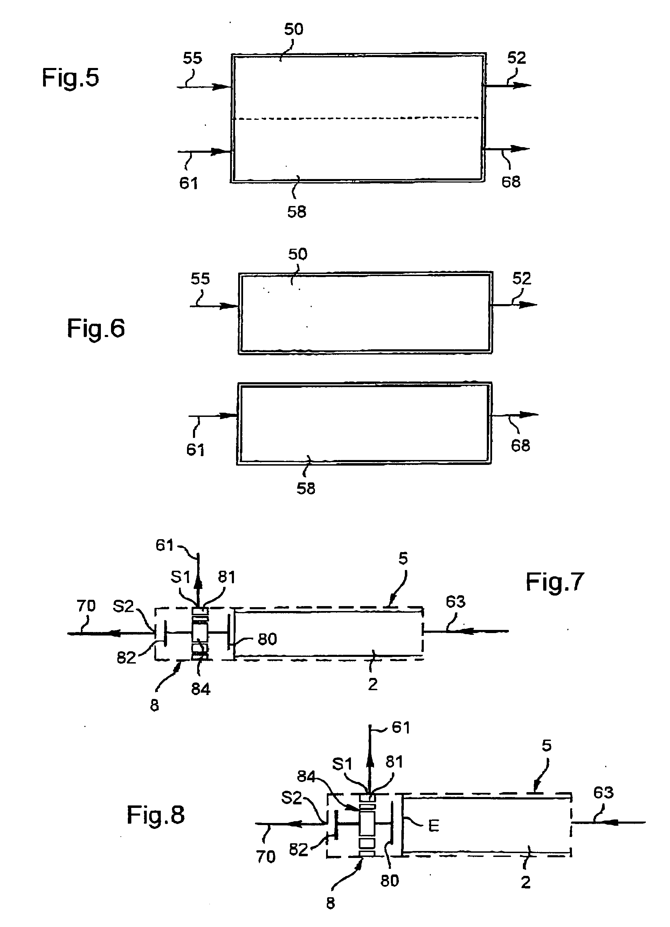

Comme représenté sur la figure 5, le radiateur à basse température 58 et le radiateur à haute température 50 peuvent faire partie d'un même radiateur commun 50. Un tel radiateur commun peut comporter deux étages, un étage à haute température correspondant au radiateur 50 et un étage à basse température correspondant au radiateur 58, séparés par un nombre choisi de passes. Ce radiateur peut comprendre une entrée reliée à la canalisation 55 et une sortie reliée à la canalisation 52, pour l'étage à haute température, ainsi qu'une entrée reliée à la canalisation 61 et une sortie reliée à la canalisation 68 pour l'étage à haute température.

En variante, les radiateurs 50 et 58 peuvent être indépendants, comme représentés sur la figure 6.
En complément, le radiateur à basse température 58 peut également alimenter un refroidisseur d'air de suralimentation 6 en liquide froid, comme représenté sur les figures 3 et 4. De manière connue, le refroidisseur d'air de suralimentation 6 est utilisé pour refroidir l'air de suralimentation du moteur préalablement à son admission dans le moteur.

La suite de la description sera faite en référence au premier mode de réalisation, à titre d'exemple non limitatif.

II est maintenant fait référence aux figures 7 à 10 qui représentent différents états de la vanne thermostatique de la première forme de réalisation, en fonction de la température du liquide à la sortie du refroidisseur de gaz d'échappement recirculés.

La vanne 8 peut être une vanne thermostatique munie d'une entrée E et de deux sorties S1 et S2. L'entrée E de la vanne 8 est en communication avec la sortie de liquide du refroidisseur EGRC et les deux sorties S1 et S2 sont respectivement en communication avec la branche 61 qui ramène le liquide dans le radiateur à basse température 58, et avec la branche 70 qui ramène le liquide dans le moteur.

La vanne thermostatique peut être directement intégrée avec le refroidisseur de gaz d'échappement recirculés 2 dans un module de refroidissement des gaz d'échappement recirculés 5, représenté schématiquement par des traits en pointillés.

Plus précisément, la vanne thermostatique 8 peut comporter une sonde de température 84, composée d'un soufflet de ressort rempli de gaz, de liquide ou de cire. Elle peut comporter en outre un premier obturateur 82 en vis-à-vis de la sortie S2 qui débouche sur la canalisation 70. La vanne 8 peut comporter en outre un deuxième obturateur 81 en vis-à-vis de la sortie S1 qui débouche sur la canalisation 61. La vanne 8 peut comporte également un troisième obturateur 80 en vis-à-vis de l'entrée E qui est reliée à la sortie de liquide du refroidisseur 2.

Les obturateurs 80, 81 et 82 sont reliés à la sonde 84. La sonde 84 se dilate ou se rétracte en fonction de la température du liquide sortant du refroidisseur 2, ce qui peut entraîner un déplacement des obturateurs 81 et 82 pour réguler le débit de liquide à réchauffer dans le moteur et/ou à refroidir dans le radiateur 50 et un déplacement de l'obturateur 80 pour réguler le débit du liquide qui arrive dans la vanne thermostatique.

La vanne thermostatique 8 peut prendre quatre états qui seront décrits ci-après.

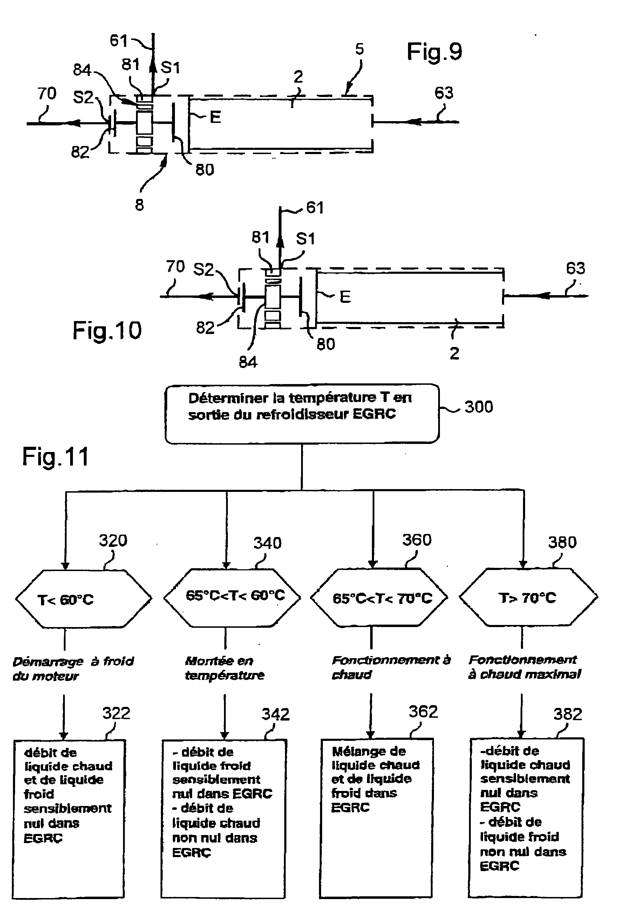

La figure 11 est un organigramme illustrant les étapes mises en oeuvre par l'installation conforme à la première forme de réalisation de l'invention pour réguler la température des gaz d'échappement recirculés en fonction des phases de fonctionnement du moteur.

A l'étape 300, la phase de fonctionnement du moteur est identifiée, à partir d'une détermination de la température T du liquide en sortie du refroidisseur de gaz d'échappement recirculés. La température du liquide en sortie du refroidisseur de gaz d'échappement recirculés peut être mesurée ou déterminée par d'autres moyens.

Si la température T du liquide en sortie du refroidisseur de gaz d'échappement recirculés est sensiblement inférieure à 60°C, le moteur est dans une phase de démarrage à froid (étape 320). En phase de démarrage à froid, les gaz EGR ne doivent pas être refroidis. A l'étape 322, le dispositif de régulation opère alors pour envoyer un débit de liquide froid et un débit de liquide chaud sensiblement nuls dans le refroidisseur EGRC. Ainsi, le refroidisseur n'est traversé que par un débit très faible de liquide, dit "débit de fuite", qui permet d'éviter l'apparition d'un phénomène de condensation.

La figure 7 illustre un premier état de la vanne thermostatique 8, correspondant à cette phase de démarrage à froid.

Sous l'effet de la température du liquide dans la vanne, la sonde 84 amène l'obturateur 80 à fermer l'entrée E reliée à la sortie de liquide du refroidisseur EGRC, ce qui permet de ne maintenir qu'un débit de fuite dans le refroidisseur EGRC.

Si la température T du liquide en sortie du refroidisseur de gaz d'échappement rocireulés est sensiblement comprise entre 60°C et 65°C, le moteur est dans une phase de montée en température (étape 340). En phase de montée en température, les gaz EGR doivent être refroidis légèrement ou ne doivent pas être refroidis du tout. A l'étape 342, le dispositif de régulation opère alors pour envoyer un débit de liquide froid sensiblement nul dans le refroidisseur EGRC, tandis qu'il envoie un débit de liquide chaud non nul dans le refroidisseur de gaz.

La figure 8 illustre un deuxième état de la vanne thermostatique 8, correspondant à cette phase de montée en température.

Sous l'effet de la température du liquide dans la vanne, la sonde 84 amène l'obturateur 81 à fermer la sortie de liquide S1 en communication avec la canalisation 61, ce qui permet de ne pas envoyer de liquide froid dans le refroidisseur EGRC. Dans cet état, la sortie de liquide S2 en communication avec la canalisation 70 est ouverte au moins partiellement.

Si la température T du liquide en sortie du refroidisseur de gaz d'échappement recirculés est sensiblement comprise entre 65°C et 70°C, le moteur est dans une phase de fonctionnement chaud (étape 360). En phase de fonctionnement chaud, les gaz EGR doivent être refroidis, mais il n'est pas utile que ce refroidissement soit optimal. A l'étape 362, le dispositif de régulation opère alors pour envoyer un débit de liquide froid et de liquide chaud non nul dans le refroidisseur EGRC.

La figure 9 illustre un troisième état de la vanne thermostatique 8, correspondant à cette phase de fonctionnement chaud.

Sous l'effet de la température du liquide dans la vanne, la sonde 84 amène l'obturateur 81 et l'obturateur 82 à ouvrir la sortie de liquide S1 en communication avec la canalisation 61 et la sortie de liquide S2 en communication avec la canalisation 70, ce qui permet d'envoyer un mélange de liquide chaud et de liquide froid dans le refroidisseur EGRC.

Si la température T du liquide en sortie du refroidisseur de gaz d'échappement recirculés est sensiblement supérieure à 70°C, le moteur est dans une phase de fonctionnement très chaud (étape 380). Le refroidissement des gaz EGR doit alors être optimal. A l'étape 382, le dispositif de régulation opère alors pour envoyer un débit de liquide chaud sensiblement nul dans le refroidisseur EGRC.

La figure 10 illustre un quatrième état de la vanne thermostatique 8 correspondant à cette phase de fonctionnement chaud.

Sous l'effet de la température du liquide dans la vanne, la sonde 84 amène l'obturateur 82 à fermer la sortie de liquide S2 en communication avec la canalisation 70, ce qui permet de n'envoyer qu'un liquide froid dans le refroidisseur EGRC. Dans cet état, la sortie de liquide S1 en communication avec la canalisation 61 est ouverte au moins partiellement.

L'installation de régulation de la température des gaz admis dans le moteur de l'invention permet ainsi d'obtenir un débit de liquide sensiblement nul dans le refroidisseur EGRC lorsque le moteur est froid, ce qui permet de limiter l'apparition d'un phénomène de condensation et d'encrassement dans le refroidisseur EGRC. Il permet en outre d'ajuster les proportions de liquide froid et de liquide chaud dans le refroidisseur EGRC, en fonction de la température du liquide en sortie du refroidisseur EGRC, ce qui permet d'optimiser la répartition de liquide entre la boucle principale et la boucle secondaire, en fonction des besoins du moteur.

L'invention n'est pas limitée aux installations de régulation de la température des gaz admis dans la moteur représentés sur les figures 3 et 4. Une telle installation peut en particulier comporter d'autres échangeurs de chaleur comme un réchauffeur d'air d'alimentation.

## Revendications

1. Installation de régulation thermique des gaz admis dans un moteur, notamment un moteur de véhicule automobile, comportant une boucle principale capable de refroidir le moteur (40) en réchauffant un liquide de refroidissement,
l'installation comportant en outre un refroidisseur de gaz d'échappement recirculés (2) relié à une arrivée de liquide (63) pour refroidir les gaz d'échappement recirculés préalablement à leur admission dans le moteur,
**caractérisée en ce que** l'installation comporte en outre une boucle secondaire capable de refroidir le liquide de refroidissement à sa sortie du moteur, et un dispositif de régulation thermique (8, 800, 801, 802) capable d'ajuster le débit de liquide chaud de la boucle principale et le débit de liquide froid de la boucle secondaire à faire passer dans l'arrivée de liquide (63) du refroidisseur de gaz d'échappement recirculés, en fonction d'au moins une grandeur relative au liquide.

2. Installation selon la revendication 1, **caractérisée en ce que** la grandeur relative au liquide est la température du liquide en sortie du refroidisseur de gaz d'échappement recirculés (2).

3. Installation selon la revendication 2, **caractérisée en ce que** le dispositif de régulation (8, 800, 801, 802) agit sur le débit de liquide à faire passer de la sortie de liquide du refroidisseur de gaz d'pement recirculés (69) à l'entrée de la boucle secondaire (61) et à l'entrée de la boucle principale (70), et **en ce que** la sortie de la boucle secondaire (68) et la sortie de la boucle principale (40) alimentent l'arrivée de liquide (63) du refroidisseurde gaz d'échappement recirculés (2).

4. Installation selon la revendication 3, **caractérisée en ce que** le dispositif de régulation thermique est une vanne thermostatique (8) agencée en sortie du refroidisseur de gaz d'échappement recirculés (2).

5. Installation selon la revendication 4, **caractérisée en ce que** la vanne thermostatique (8) met en communication la sortie de liquide du refroidisseur de gaz d'échappement recirculés (69) avec l'entrée de liquide (70) de la boucle principale et l'entrée de liquide de la boucle secondaire (61).

6. Installation selon l'une des revendications 4 et 5. **caractérisée en ce que** le dispositif de régulation thermique (8, 800, 801, 802) est apte à faire passer un débit de liquide sensiblement nul de la boucle principale dans le refroidisseur de gaz d'échappement recirculés (2) et un débit de liquide sensiblement nul de la boucle secondaire dans le refroidisseur de gaz d'échappement recirculés (2), lorsque la température du liquide en sortie du refroidisseur de gaz d'échappement recirculés (2) est sensiblement inférieure à 60°C.

7. Installation selon l'une des revendications 4 à 6, **caractérisée en ce que** le dispositif de régulation thermique (8, 800, 801, 802) est apte à faire passer un débit de liquide sensiblement nul de la boucle secondaire dans le refroidisseur de gaz d'échappement recirculés, lorsque la température du liquide en sortie du refroidisseur de gaz d'échappement recirculés (2) est sensiblement comprise entre 60°C et 65°C.

8. Installation selon l'une des revendications 4 à 7, **caractérisée en ce que** le dispositif de régulation thermique (8, 800, 801, 802) est apte à faire passer un mélange de liquide de la boucle principale et de liquide de la boucle secondaire dans le refroidisseur de gaz d'échappement recirculés,. lorsque la température du liquide en sortie du refroidisseur de gaz d'échappement recirculés (2) est sensiblement comprise entre 65°C et 70°C.

9. Installation selon l'une des revendications 4 à 8, **caractérisée en ce que** le dispositif de régulation thermique (8, 800, 801, 802) est apte à faire passer un débit de liquide sensiblement nul de la boucle principale dans le refroidisseur de gaz d'échappement recirculés, lorsque la température du liquide en sortie du refroidisseur de gaz d'échappement recirculés (2) est sensiblement supérieure à 70°C.

10. Installation selon la revendication 2, **caractérisée en ce que** le dispositif de régulation agit sur le débit de liquide à faire passer de la sortie de la boucle principale (62) et de la sortie de la boucle secondaire (68) à l'arrivée de liquide (63) du refroidisseur de gaz d'échappement recirculés (2), et **en ce que** la sortie de liquide (69) du refroidisseur de gaz d'échappement recirculés (2) alimente l'entrée de liquide de la boucle secondaire (61) et l'entrée de liquide de la boucle principale (70).

11. Installation selon la revendication 10, **caractérisée en ce que** le dispositif de régulation thermique comporte une sonde de température (800) agencée en sortie du refroidisseur de gaz d'échappement recirculés et des électrovannes (801, 802) coopérant avec la sonde.

12. Installation selon la revendication 11, **caractérisée en ce que** les électrovannes (801, 802) comprennent une première électrovanne (801) raccordant la sortie de la boucle principale (62) à l'arrivée de liquide (63) du refroidisseur de gaz d'échappement recirculés et une deuxième électrovanne (802) raccordant la sortie de la boucle secondaire (68) à l'arrivée de liquide (63) du refroidisseur de gaz d'échappement recirculés.

13. Installation selon l'une des revendications 1 à 12, **caractérisée en ce que** la boucle principale comprend un radiateur principal de refroidissement à haute température (50) pour refroidir le liquide de refroidissement à sa sortie du moteur (40).

14. Installation selon la revendication 13, **caractérisée en ce que** la boucle secondaire comprend un radiateur secondaire de refroidissement à basse température (58) pour le refroidissement du liquide. l'écart entre la haute température du radiateur principal et la basse température du radiateur secondaire étant égal à au moins 10°C.

15. Installation selon l'une des revendications 13 et 14, **caractérisée en ce que** le radiateur principal (50) et le radiateur secondaire (58) font partie intégrante d'un même radiateur.

16. Installation selon l'une des revendications 1 à 15, **caractérisée en ce que** l'installation comporte en outre un refroidisseur d'air d'admission (6) relié à une arrivée de liquide froid pour refroidir l'air d'admission alimentant le moteur, et **en ce que** le liquide froid est délivré par le radiateur secondaire (58) de la boucle secondaire.

17. Procédé de régulation de la température de gazadmis dans un moteur, comportant le refroidissement des gaz d'échappement recirculés dans un refroidisseur de gaz d'échappement recirculés (2), préalablement à leur admission dans le moteur,
**caractérisé en ce que** l'on fait circuler un liquide chaud provenant du circuit de refroidissement du moteur (40) et/ou un liquide froid dans le refroidisseur de gaz d'échappement recirculés (2) pour refroidir les gaz d'échappement recirculés, le débit de liquide chaud et le débit de liquide froid étant ajustés en fonction de la température du liquide en sortie du refroidisseur de gaz d'échappement recirculés.

18. Procédé de régulation selon la revendication 17, **caractérisé en ce que** la circulation de liquide chaud et de liquide froid dans le refroidisseur de gaz d'échappement recirculés (2) est sensiblement nulle, lorsque la température du liquide en sortie du refroidisseur de gaz d'échappement recirculés (2) est sensiblement inférieure à 60°C.

19. Procédé de régulation selon l'une des revendications 16 et 17, **caractérisé en ce que** la circulation de liquide froid est sensiblement nulle dans le refroidisseur de gaz d'échappement recirculés (2), lorsque la température du liquide en sortie du refroidisseur de gaz d'échappement recirculés (2) est sensiblement comprise entre 60°C et 65°C.

20. Procédé de régulation selon l'une des revendications 18 et 19, **caractérisé en ce que** l'on fait circuler un mélange de liquide à haute température et de liquide à basse température dans le refroidisseur de gaz d'échappement recirculés (2), lorsque la température du liquide en sortie du refroidisseur de gaz d'échappement recirculés (2) est sensiblement comprise entre 65°C et 70°C.

21. Procédé de régulation selon l'une des revendications 16 à 20, **caractérisé en ce que** la circulation de liquide chaud est sensiblement nulle dans le refroidisseur de gaz d'échappement recirculés (2), lorsque la température du liquide en sortie du refroidisseur de gaz d'échappement recirculés (2) est sensiblement supérieure à 70°C.

22. Echangeur pour le refroidissement de gaz d'échappement recirculés (5) comportant un refroidisseur de gaz d'échappement recirculés (2) relié à une arrivée de gaz d'échappement recirculés, et à une arrivée de liquide pour un échange de chaleur avec les gaz d'échappement recirculés, **caractérisé en ce que** l'échangeur comporte en outre un dispositif de régulation comportant une entrée (E) raccordée à la sortie du refroidisseur de gaz d'échappement recirculés (2) et deux sorties (S1, S2), et **en ce que** le dispositif de régulation est apte à ajuster le débit de liquide à faire passer de son entrée (E) à chacune de ses sorties (S1, S2), en fonction de la température du liquide en sortie du refroidisseur de gaz d'échappement recirculés (2).

23. Echangeur selon la revendication 22, **caractérisé en ce que** le dispositif de régulation est apte à fermer son entrée (E), lorsque la température du liquide en sortie du refroidisseur de gaz d'échappement recirculés (2) est sensiblement inférieure à 60°C.

24. Echangeur selon la revendication 23, **caractérisé en ce que** le dispositif de régulation est apte à fermer l'une de ses sorties (S1), dite première sortie, et à ouvrir au moins partiellement son autre sortie (S2), dite deuxième sortie, lorsque la température du liquide en sortie du refroidisseur de gaz d'échappement recirculés (2) est sensiblement comprise entre 60°C et 65°C.

25. Echangeur selon la revendication 24, **caractérisé en ce que** le dispositif de régulation est apte à ouvrir au moins partiellement chacune de ses sorties (S1, S2), lorsque la température du liquide en sortie du refroidisseur de gaz d'échappement recirculés (2) est sensiblement comprise entre 65°C et 70°C.

26. Echangeur selon la revendication 25. **caractérisé en ce que** le dispositif de régulation est apte à fermer sa deuxième sortie (S2), et à ouvrir au moins partiellement la première sortie (S1) lorsque la température du liquide en sortie du refroidisseur de gaz d'échappement recirculés (2) est sensiblement est sensiblement supérieure à 70°C.

27. Echangeur selon l'une des revendications 22 à 26. **caractérisé en ce que** le dispositif de régulation est une vanne thermostatique.
